# EUROPEAN PATENT APPLICATION

(11) **EP 4 823 224 A1**
(43) Date of publication of application: **14.10.2026**
(21) Application number: 24916752.9
(22) Date of filing: 26.12.2024
(51) Int. Cl.: H04W 76/14

(54) **VOICE OUTPUT CHANNEL SWITCHING METHOD, TERMINAL DEVICE, AND STORAGE MEDIUM**

(30) Priority: 10.01.2024 CN 202410044056
(71) Applicant: Honor Device Co., Ltd., Shenzhen, Guangdong 518040 (CN)
(72) Inventor: AN, Dong, Shenzhen, Guangdong 518040 (CN); MA, Limin, Shenzhen, Guangdong 518040 (CN)
(74) Representative: Gill Jennings & Every LLP
(86) International application number: PCT/CN2024/142874
(87) International publication number: WO 2025/148705

(57) **Abstract**

This application provides a sound outlet channel switching method, a terminal device, and a storage medium, and relates to the field of communication technologies. The method includes: if the terminal device establishes Bluetooth connections with a plurality of Bluetooth devices and establishes a synchronous connection oriented link with a first Bluetooth device, in response to a first call task, sending call audio data to the first Bluetooth device; and if a link establishment request sent by a second Bluetooth device is received and a request instruction corresponding to the link establishment request is a first instruction, maintaining the synchronous connection oriented link with the first Bluetooth device; or if the request instruction is a second instruction, disconnecting the synchronous connection oriented link with the first Bluetooth device, establishing a synchronous connection oriented link with the second Bluetooth device, and sending the call audio data to the second Bluetooth device. In the foregoing method, after a Bluetooth device sends the link establishment request corresponding to the first instruction, a sound outlet channel is not switched. This avoids switching of the sound outlet channel caused by the Bluetooth device actively triggering the link establishment request.

## Description

This application claims priority to Chinese Patent Application No. 202410044056.0, filed with the China National Intellectual Property Administration on January 10, 2024 and entitled "SOUND OUTLET CHANNEL SWITCHING METHOD, TERMINAL DEVICE, AND STORAGE MEDIUM", which is incorporated herein by reference in its entirety.

### TECHNICAL FIELD

This application belongs to the field of communication technologies, and in particular, to a sound outlet channel switching method, a terminal device, and a storage medium.

### BACKGROUND

Through a wireless communication protocol, a terminal device may establish a connection and exchange data with another external device. For example, through a Bluetooth protocol, the terminal device may simultaneously establish Bluetooth connections to a plurality of Bluetooth devices, such as a Bluetooth earphone, a vehicle-mounted Bluetooth, a Bluetooth bracelet, and a Bluetooth speaker box. The terminal device may establish a synchronous connection oriented (Synchronous Connection Oriented, SCO) link with any Bluetooth device that has established the Bluetooth connection with the terminal device. After the SCO link is established, in an execution process of a call task, the terminal device may send call audio data corresponding to the call task to a Bluetooth device with which the SCO link is established, so that the Bluetooth device serves as a sound outlet channel for the call audio data. For example, the call audio data is played by a Bluetooth earphone or a vehicle-mounted Bluetooth.

In a process in which the Bluetooth device that has established the SCO link with the terminal device plays the call audio data, another Bluetooth device that has established a Bluetooth connection with the terminal device may also send an SCO establishment connection request to the terminal device. If the terminal device directly responds to the SCO establishment connection request and establishes an SCO link with the Bluetooth device that sends the connection request, an event may occur in which an audio device, contrary to an intention of a user, successfully preempts the sound outlet channel, that is, the sound outlet channel is switched against the intention of the user, resulting in poor use experience of the user.

### SUMMARY

Embodiments of this application disclose a sound outlet channel switching method, a terminal device, and a storage medium. This avoids switching of a sound outlet channel against an intention of a user in a process in which the terminal device executes a call task.

A first aspect of this application discloses a sound outlet channel switching method, applied to a terminal device. The method includes: if the terminal device establishes Bluetooth connections with a plurality of Bluetooth devices and establishes a synchronous connection oriented link with a first Bluetooth device in the plurality of Bluetooth devices, in response to a first call task, sending call audio data corresponding to the first call task to the first Bluetooth device based on the synchronous connection oriented link with the first Bluetooth device, to cause the first Bluetooth device to play the call audio data corresponding to the first call task; in an execution process of the first call task, if a link establishment request sent by a second Bluetooth device in the plurality of Bluetooth devices is received, determining a request instruction corresponding to the link establishment request; and maintaining the synchronous connection oriented link with the first Bluetooth device if the request instruction is a first instruction; or disconnecting the synchronous connection oriented link with the first Bluetooth device and establishing a synchronous connection oriented link with the second Bluetooth device if the request instruction is a second instruction; and sending the call audio data corresponding to the first call task to the second Bluetooth device based on the synchronous connection oriented link with the second Bluetooth device, to cause the second Bluetooth device to play the call audio data corresponding to the first call task.

According to the foregoing method, after the second Bluetooth device sends the link establishment request whose request type is the first instruction, the first Bluetooth device may continue to be used as an audio output device, and a sound outlet channel is not switched. This avoids switching of the sound outlet channel caused by the second Bluetooth device actively triggering the link establishment request, and avoids switching of the sound outlet channel against an intention of a user in a process in which the device executes a call task. Alternatively, after the second Bluetooth device sends the link establishment request corresponding to the second instruction, the first Bluetooth device is stopped from being used as the audio output device, and the second Bluetooth device is used as the audio output device, so that the call audio data corresponding to the first call task is switched from being played by the first Bluetooth device to being played by the second Bluetooth device, to implement switching of the sound outlet channel.

In some optional implementations, the method further includes: the disconnecting the synchronous connection oriented link with the first Bluetooth device and establishing the synchronous connection oriented link with the second Bluetooth device if the request instruction is the second instruction includes: if the request instruction is the second instruction and the link establishment request is a request received after a preset time period after the terminal device starts the first call task, disconnecting the synchronous connection oriented link with the first Bluetooth device and establishing the synchronous connection oriented link with the second Bluetooth device. According to the foregoing method, the received link establishment request corresponding to the second instruction may be further determined based on the preset time period after the terminal device starts the first call task, to determine whether the link establishment request is the link establishment request actively triggered by the second Bluetooth device, and whether to disconnect the synchronous connection oriented link with the first Bluetooth device and re-establish the synchronous connection oriented link with the second Bluetooth device is determined based on a determining result. This avoids switching of a sound outlet channel against an intention of a user in a process in which the device executes a call task, and further improves accuracy of switching of the sound outlet channel.

In some optional implementations, the method further includes: if the request instruction is the second instruction and the link establishment request is a request received within the preset time period after the terminal device starts the first call task, maintaining the synchronous connection oriented link with the first Bluetooth device. According to the foregoing method, switching of the sound outlet channel caused by the link establishment request corresponding to the second instruction automatically generated by a Bluetooth device can be avoided, to further improve accuracy of switching of the sound outlet channel.

In some optional implementations, after the terminal device establishes the Bluetooth connections with the plurality of Bluetooth devices, the method further includes: if a device type of the second Bluetooth device is different from a device type of the first Bluetooth device and a preset priority of the first Bluetooth device is higher than a preset priority of the second Bluetooth device, establishing the synchronous connection oriented link with the first Bluetooth device. According to the foregoing method, an output audio device that a user may need may be accurately determined in the plurality of Bluetooth devices connected to the terminal device.

In some optional implementations, after the terminal device establishes the Bluetooth connections with the plurality of Bluetooth devices, the method further includes: if a device type of the second Bluetooth device is the same as a device type of the first Bluetooth device, establishing the synchronous connection oriented link with the first Bluetooth device, where time at which the first Bluetooth device establishes a Bluetooth connection with the terminal device is later than time at which the second Bluetooth device establishes a Bluetooth connection with the terminal device. According to the foregoing method, an output audio device that a user may need may be accurately determined in the plurality of Bluetooth devices connected to the terminal device.

In some optional implementations, the method further includes: if the terminal device establishes a Bluetooth connection and a synchronous connection oriented link with a single third Bluetooth device, in response to a second call task, sending call audio data corresponding to the second call task to the third Bluetooth device based on the synchronous connection oriented link with the third Bluetooth device, to cause the third Bluetooth device to play the call audio data corresponding to the second call task; receiving a Bluetooth connection instruction and establishing a Bluetooth connection with a fourth Bluetooth device; and in an execution process of the second call task, if a link establishment request sent by the fourth Bluetooth device is received and the fourth Bluetooth device is not a target Bluetooth device, maintaining the synchronous connection oriented link with the third Bluetooth device. According to the foregoing method, when the third Bluetooth device is used as an audio output device to output the call audio data, in a case that the fourth Bluetooth device sends the link establishment request and the fourth Bluetooth device is not the target Bluetooth device, the third Bluetooth device may continue to be used as the audio output device, and a sound outlet channel is not switched. This avoids switching of the sound outlet channel caused by the link establishment request triggered when the fourth Bluetooth device is not the target Bluetooth device, improves stability of the third Bluetooth device used as the audio output device to output the call audio data, and ensures use experience of a user when using the third Bluetooth device for a call.

In some optional implementations, the method further includes: in the execution process of the first call task, in response to a second Bluetooth connection instruction, establishing a Bluetooth connection with a fifth Bluetooth device; and in the execution process of the first call task, if a link establishment request sent by the fifth Bluetooth device is received, skipping responding to the link establishment request. When the first Bluetooth device is used as the audio output device to output the call audio data corresponding to the first call task, if the terminal device establishes the Bluetooth connection with the fifth Bluetooth device in the execution process of the first call task, in the execution process of the first call task, even if the fifth Bluetooth device sends the link establishment request, the terminal device may continue using the first Bluetooth device as the audio output device, and a sound outlet channel is not switched. This avoids switching of the sound outlet channel caused by the fifth Bluetooth device triggering the link establishment request, improves stability of the first Bluetooth device used as the audio output device to output the call audio data, and ensures use experience of a user when using the first Bluetooth device for a call.

In some optional implementations, the first instruction is connection request; and the second instruction is AT+BCC.

A second aspect of this application discloses a sound outlet channel switching method, applied to a Bluetooth chip. The method includes: if the terminal device establishes Bluetooth connections with a plurality of Bluetooth devices and establishes a synchronous connection oriented link with a first Bluetooth device in the plurality of Bluetooth devices, in response to a first call task, sending call audio data corresponding to the first call task to the first Bluetooth device based on the synchronous connection oriented link with the first Bluetooth device, to cause the first Bluetooth device to play the call audio data corresponding to the first call task; in an execution process of the first call task, if a link establishment request sent by a second Bluetooth device in the plurality of Bluetooth devices is received, determining a request instruction corresponding to the link establishment request; and maintaining the synchronous connection oriented link with the first Bluetooth device if the request instruction is a first instruction; or disconnecting the synchronous connection oriented link with the first Bluetooth device and establishing a synchronous connection oriented link with the second Bluetooth device if the request instruction is a second instruction; and sending the call audio data corresponding to the first call task to the second Bluetooth device based on the synchronous connection oriented link with the second Bluetooth device, to cause the second Bluetooth device to play the call audio data corresponding to the first call task.

A third aspect of this application discloses a terminal device, including a processor and a memory, where the memory is configured to store instructions, and the processor is configured to invoke the instructions in the memory, to enable the terminal device to perform the sound outlet channel switching method according to the first aspect.

A fourth aspect of this application discloses a computer-readable storage medium, including computer instructions, where when the computer instructions are run on a terminal device, the terminal device is enabled to perform the sound outlet channel switching method according to the first aspect.

It should be understood that, the method according to the second aspect, the terminal device according to the third aspect and the computer-readable storage medium according to the fourth aspect that are provided above all correspond to the method according to the first aspect. Therefore, for beneficial effects that can be achieved according to the foregoing aspects, refer to beneficial effects in the corresponding methods provided above. Details are not described herein again.

### BRIEF DESCRIPTION OF DRAWINGS

FIG. 1 is a schematic diagram of a system architecture to which a sound outlet channel switching method is applicable according to an embodiment of this application;
FIG. 2 is a schematic diagram of a Bluetooth configuration interface according to an embodiment of this application;
FIG. 3 is a schematic diagram of a structure of a Bluetooth device according to an embodiment of this application;
FIG. 4 is a schematic diagram of an audio output device confirmation method according to an embodiment of this application;
FIG. 5 is a schematic diagram of a sound outlet channel switching method according to an embodiment of this application;
FIG. 6 is a schematic diagram of a second Bluetooth device sending a link establishment request according to an embodiment of this application;
FIG. 7 is a schematic diagram of a second Bluetooth device sending a link establishment request according to an embodiment of this application;
FIG. 8 is a schematic diagram of a channel switching method based on a second instruction according to an embodiment of this application;
FIG. 9 is a schematic diagram of a sound outlet channel switching method according to an embodiment of this application;
FIG. 10 is a schematic diagram of a sound outlet channel switching method according to an embodiment of this application; and
FIG. 11 is a schematic diagram of a structure of a terminal device according to an embodiment of this application.

### DESCRIPTION OF EMBODIMENTS

Terms "first" and "second" mentioned below are used merely for the purpose of description, and shall not be understood as indicating or implying relative importance or implying a quantity of indicated technical features. Therefore, a feature limited by "first" or "second" may explicitly or implicitly include one or more features. In descriptions of embodiments of this application, the term such as "example" or "for example" is used to represent giving an example, an illustration, or a description. Any embodiment or design solution described as "example" or "for example" in embodiments of this application should not be explained as being more preferred or having more advantages than another embodiment or design scheme. Exactly, use of the term such as "example" or "for example" is intended to present a related concept in a specific manner.

Unless otherwise defined, all technical and scientific terms used in this specification have same meanings as those usually understood by a person skilled in the art of this application. Terms used in the specification of this application are merely for the purpose of describing specific embodiments, but are not intended to limit this application. It should be understood that in this application, "/" represents "or" unless otherwise specified. For example, A/B may represent A or B. In this application, "and/or" describes only an association relationship between associated objects and represents that three relationships may exist. For example, A and/or B may represent the three cases: Only A exists, both A and B exist, and only B exists. "At least one" means one or more. "A plurality of" means two or more. For example, at least one of a, b, or c may represent seven cases: a, b, c, a and b, a and c, b and c, and a, b, and c. It should be understood that the sequence of steps shown in the flowcharts in this specification may be changed, and some steps may alternatively be omitted.

To better understand embodiments of this application, the following describes by using an example with reference to the accompanying drawings, a sound outlet channel switching method according to an embodiment of this application. The following several specific embodiments may be independently implemented, or may be combined with each other, and the same or similar concepts or processes may not be described repeatedly in some embodiments.

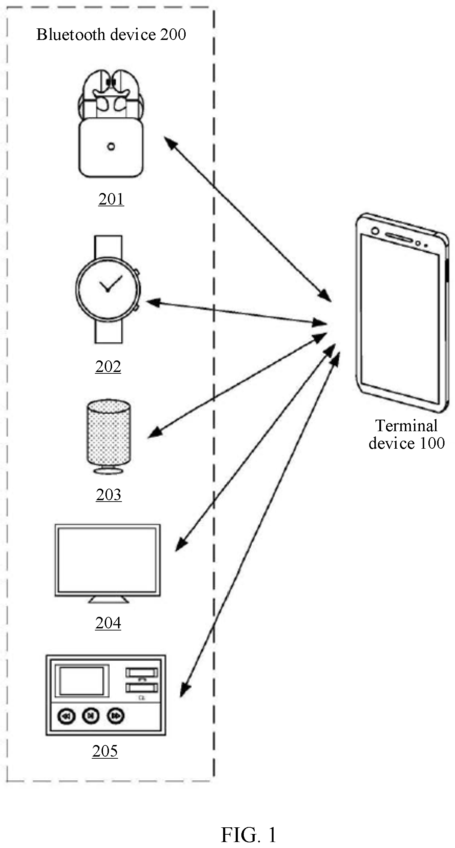

FIG. 1 is a schematic diagram of a system architecture to which a sound outlet channel switching method is applicable according to an embodiment of this application. The system architecture includes a terminal device 100 and at least one Bluetooth device 200. The terminal device 100 may communicate with the Bluetooth device 200 in wireless communication manners such as Bluetooth (Bluetooth, BT), near field communication (near field communication, NFC), wireless fidelity (wireless fidelity, Wi-Fi), and Wi-Fi Direct. In embodiments of this application, Bluetooth communication is used as an example for description. In an implementation of this application, the terminal device 100 may communicate with the Bluetooth device 200 by using a Bluetooth technology. The Bluetooth technology may include classic Bluetooth, Bluetooth low energy (Bluetooth low energy, BLE), and Bluetooth 5.0. The terminal device 100 may be a terminal device such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an artificial intelligence (artificial intelligence, AI) device, a wearable device, a vehicle-mounted device, a smart household device, and/or a smart city device.

As shown in FIG. 1, the Bluetooth device 200 may include a device that supports a Bluetooth function and can play audio, such as a Bluetooth earphone 201, a smart watch 202, a Bluetooth speaker box 203, a smart television 204, and a vehicle-mounted device 205. The Bluetooth device may be configured to play audio data sent by the terminal device 100. In embodiments of this application, the Bluetooth earphone 201 may be of a plurality of types, for example, may be a hearing device, a true wireless stereo (True Wireless Stereo, TWS) earphone, an earbud earphone, an in-ear earphone, a headphone, an earmuff earphone, a neckband earphone, or an ear-hook earphone. The Bluetooth earphone may include a first part and a second part that are respectively worn on a left ear and a right ear of a user. The first part and the second part may be connected through a connection line, for example, a neckband earphone. The first part and the second part may alternatively be two parts independent of each other, for example, a true wireless stereo (true wireless stereo, TWS) earphone.

In embodiments of this application, the terminal device 100 may determine an audio output device in at least one Bluetooth device 200 that has established a Bluetooth connection. After the audio output device is determined, an SCO link with the determined audio output device is established. The SCO link, that is, the synchronous connection oriented link, is used to transmit data communication with a high timing requirement. The audio output device may be configured to perform call output and media output. For example, the audio output device may receive call audio data sent by the terminal device, and perform call output. For another example, the audio output device may perform media output, for example, play music, based on received media audio data sent by the terminal device. In embodiments of this application, when a Bluetooth device is determined as an audio output device of the terminal device, the terminal device establishes an SCO link with the Bluetooth device. For example, when an earphone 1 is an audio output device of the terminal device, the terminal device establishes an SCO link with the earphone 1. In an execution process a call task, the terminal device may send call audio data corresponding to the call task to the earphone 1 based on the SCO link with the earphone 1, so that the earphone 1 plays the call audio data. The audio output device may send, to the terminal device based on the SCO link between the audio output device and the terminal device, audio data collected in the call task, so that the terminal device transfers the audio data to another terminal device corresponding to the call task.

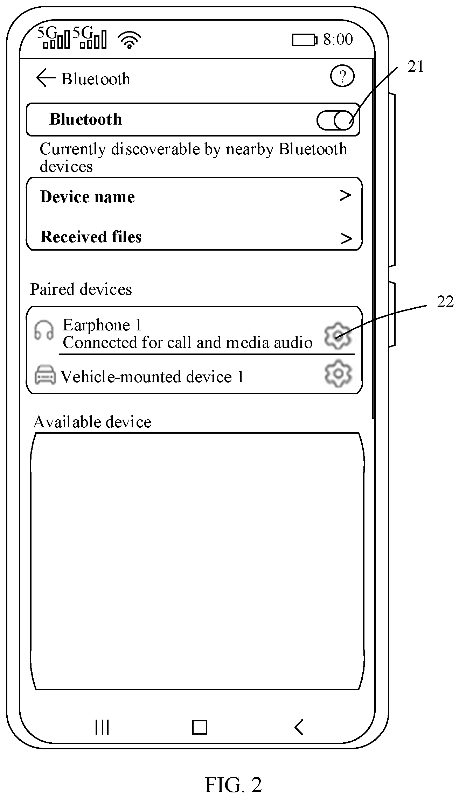

The following describes, by way of example with reference to a user interface of the terminal device, a case in which the terminal device establishes Bluetooth connections with a plurality of Bluetooth devices in this application. FIG. 2 is a schematic diagram of a Bluetooth configuration interface according to an embodiment of this application. As shown in FIG. 2, the Bluetooth configuration interface includes a Bluetooth on/off status, a device name, paired devices, and audio output configuration options of a terminal device. The Bluetooth on/off status may be controlled by using a switch control 21. For example, when a circle in the switch control 21 is on the left, it indicates that Bluetooth of the terminal device is in an off state. When the circle in the switch control 21 is on the right, it indicates that Bluetooth of the terminal device is in an on state. A user may switch a Bluetooth state of the terminal device by operating the switch control 21.

The device name is a name of Bluetooth of the terminal device. The device name may be a user-defined name, or may be a name preset by the terminal device.

The paired devices include a device that has established a Bluetooth connection with the terminal device and a device that has previously established a Bluetooth connection with the terminal device. The device that has established the Bluetooth connection is a device that is currently connected to the terminal device through Bluetooth. The device that has previously established the Bluetooth connection is a device that has historically established the Bluetooth connection with the terminal device and that is not currently connected to the terminal device through Bluetooth. The device that is currently connected to the terminal device through Bluetooth may include a determined audio output device. As shown in FIG. 2, after establishing an SCO link with an earphone 1, the terminal device may display, in a display area corresponding to the earphone 1, a link established prompt, such as "Connected for call and media audio". In an embodiment of this application, the terminal device may be directly used as an audio output device, and a speaker of the terminal device may be used to play call audio data corresponding to a call task, or play media audio data on the terminal device.

In an embodiment of this application, a user may select from the audio output configuration options to manually choose an audio output device. As shown in FIG. 2, each paired device includes a corresponding audio output configuration option 22. Based on the audio output configuration option 22 of the paired device, the device may be set as an audio output device, or setting of the device as an audio output device may be canceled. For example, as shown in FIG. 2, a vehicle-mounted device 1 may be set as an audio output device based on an audio output configuration option 22 of the vehicle-mounted device 1.

In an embodiment of this application, corresponding priorities may be preset on the terminal device for Bluetooth devices of different device types. After the terminal device establishes communication connections with a plurality of Bluetooth devices, the terminal device may determine, based on the preset priorities, an audio connection device in the plurality of Bluetooth devices that has established the communication connections. For example, assuming that a priority preset for a vehicle-mounted device is lower than a priority of a Bluetooth earphone, when the terminal device simultaneously establishes the communication connections with the vehicle-mounted device 1 and the Bluetooth earphone 1, the terminal device determines, based on the priorities, the Bluetooth earphone 1 as an audio output device. In an embodiment of this application, after determining the audio output device based on the priorities, the terminal device may further reconfirm an audio output device based on an operation of the user on an audio output configuration option.

The foregoing describes a correspondence between the terminal device, the Bluetooth device, and the Bluetooth configuration interface by using an example of content of the Bluetooth configuration interface of the terminal device.

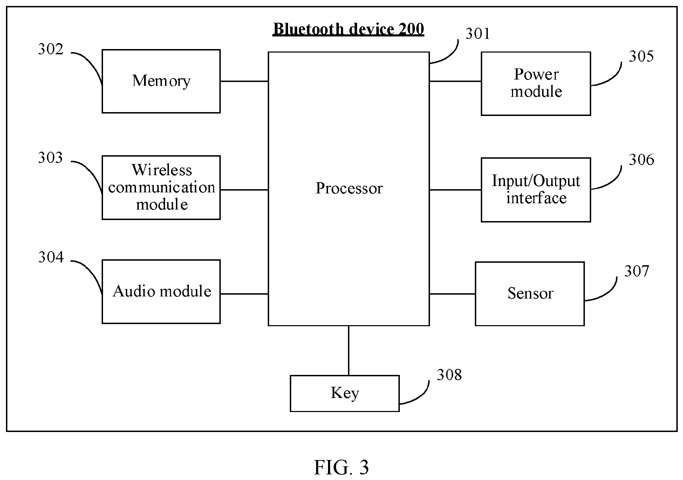

For example, FIG. 3 is a schematic diagram of a structure of a Bluetooth device. The Bluetooth device 200 may include at least one processor 301, at least one memory 302, a wireless communication module 303, an audio module 304, a power module 305, an input/output interface 306, and the like. The processor may include one or more interfaces, and is configured to connect to another component of the Bluetooth device 200. The following describes components of the Bluetooth device 200 with reference to FIG. 3 by using an example in which the Bluetooth device 200 is a Bluetooth earphone.

The memory 302 may be configured to store program code, such as program code used for performing a physical connection between the Bluetooth device 200 and a plurality of terminal devices, a service specification connection to a terminal device, processing of an audio service of a terminal device (for example, music playback and an incoming/outgoing call), charging of the Bluetooth device 200, and a wireless pairing connection between the Bluetooth device 200 and another terminal device. The memory 302 may be further configured to store other information, such as a priority of a terminal device.

The processor 301 may be configured to execute the foregoing application program code, and invoke related modules to implement functions of the Bluetooth device 200 in this embodiment of this application. For example, functions such as a physical connection, a virtual connection, audio playback, an incoming/outgoing call between the Bluetooth device 200 and a terminal device 100, and switching a service specification connection between different terminal devices based on device priority are implemented. The physical connection is a connection based on a physical link, and may include an SCO link or a low energy asynchronous connection link/logical transport (low energy asynchronous connection link/logical transport, LEACL) connection. For example, the Bluetooth device 200 sends a link establishment request to the terminal device, to establish an SCO link between the Bluetooth device 200 and the terminal device. The virtual connection refers to that the terminal device 100 is nearby the Bluetooth device 200, and may receive a BLE broadcast sent by the Bluetooth device 200, and the terminal device 100 does not need the physical link for data transmission. Compared with the physical connection, the virtual connection can save power of the Bluetooth device 200 and the terminal device 100, and prolong a use time length of the Bluetooth device 200 and the terminal device 100.

The processor 301 may include one or more processing units. Different processing units may be independent components, or may be integrated into one or more processors 301. The processor 301 may be an integrated control chip, or may be formed by a circuit including various active and/or passive components, and the circuit is configured to perform functions of the processor 301 described in this embodiment of this application.

The wireless communication module 303 may be configured to support data exchange between the Bluetooth device 200 and another terminal device or an earphone case by using a wireless communication technology. In some embodiments, the wireless communication module 303 may be a Bluetooth chip. The Bluetooth device 200 may perform pairing with and establish a wireless connection with a Bluetooth chip of the another terminal device through the Bluetooth chip, to implement wireless communication and service processing between the Bluetooth device 200 and the another terminal device through the wireless connection. The Bluetooth chip may support a basic rate (basic rate, BR)/an enhanced data rate (enhanced data rate, EDR) Bluetooth and BLE, for example, may receive/send page (page) information, receive/send a BLE broadcast message, and the like. The Bluetooth chip may support a basic rate (basic rate, BR)/an enhanced data rate (enhanced data rate, EDR) Bluetooth and BLE, for example, may receive/send page (page) information, receive/send a BLE broadcast message, and the like. For example, the Bluetooth chip may transmit a signal, for example, a BLE signal, so that the terminal device 100 discovers the Bluetooth device 200 and establishes a Bluetooth connection and communication with the Bluetooth device 200. The Bluetooth chip may further monitor a signal transmitted by the terminal device 100, such as a detection request or a scanning signal, and may send a response signal or a scanning response, so that the terminal device 100 may discover the Bluetooth device 200 and establish a wireless connection and communication with the Bluetooth device 200. In an embodiment of this application, the Bluetooth chip may monitor service information of the terminal device 100, and if the service information is monitored, the Bluetooth chip determine that the terminal device 100 has an audio service.

The audio module 304 may be configured to manage audio data, and implement input and output of an audio stream by the Bluetooth device 200. For example, the audio module 304 may obtain an audio stream from the wireless communication module 303, or transfer an audio stream to the wireless communication module 303, to implement functions such as an incoming/outgoing call by using the Bluetooth device 20, playing music, starting/closing a voice assistant of a terminal device connected to an earphone, and receiving/sending voice data of a user. The audio module 304 may include a speaker (or referred to as an earpiece or a receiver) component configured to output an audio stream, a microphone (or referred to as a mic or a transmitter), a microphone receiving circuit matching the microphone, and the like. The speaker may be configured to convert an audio electrical signal into a sound signal and play the sound signal. The microphone may be configured to convert a sound signal into an audio electrical signal.

The power module 305 may be configured to provide a system power supply to the Bluetooth device 20, supply power to modules of the Bluetooth device 20, and support the Bluetooth device 20 to receive a charging input, and the like. The power module 305 may include a power management unit (power management unit, PMU) and a battery. The power management unit may receive an external charging input. An electric signal input by a charging circuit is transformed and then provided to the battery for charging, or an electric signal provided by the battery may be transformed and then provided to another module such as the audio module 304 and the wireless communication module 303, preventing the battery from being overcharged, being overdischarged, being short-circuited, being overcurrent, or the like. In some embodiments, the power module 305 may further include a wireless charge coil, configured to wirelessly charge the Bluetooth device 20. In addition, the power management unit may be further configured to monitor battery capacity, a quantity of battery cycles, a battery health state (electric leakage and impedance), and other parameters.

A plurality of input/output interfaces 306 may be configured to provide an interface for charging the Bluetooth device 20 or a wired connection interface for communication. In some embodiments, the input/output interface 306 may be a USB interface. In some other embodiments, the input/output interface 306 may be an electrical connector of an earphone. When the Bluetooth device 20 is placed in an earphone case, the Bluetooth device 20 may establish an electrical connection with an electrical connector in the earphone case by using the electrical connector of the earphone, to charge a battery in the Bluetooth device 20. In some other embodiments, after the electrical connection is established, the Bluetooth device 20 may further perform data communication with the earphone case, for example, may receive a pairing instruction from the earphone case.

In addition, the Bluetooth device 20 may further include a sensor 307. For example, the sensor 307 may be a distance sensor or a proximity light sensor, and may be configured to determine whether the Bluetooth device 20 is worn by a user. For example, the Bluetooth device 20 may detect, by using the distance sensor, whether there is an object near the Bluetooth device 20, to determine whether the Bluetooth device 20 is worn by the user. When it is determined that the Bluetooth device 20 is worn, the Bluetooth device 20 may turn on a speaker.

It may be understood that the structure shown in this embodiment of this application does not constitute a specific limitation on the Bluetooth device 20. The Bluetooth device 200 may include more or fewer components than those shown in FIG. 3, or may combine two or more components, or may have a different component deployment. For example, an outer surface of the Bluetooth device 20 may further include components such as a key 308, an indicator (which may indicate a state such as a power quantity, an incoming/outgoing call, or a pairing mode), a display screen (which may prompt related information of a user), and a dirt protection network (which may be used in cooperation with an earphone). The key 308 may be a physical key, a touch key (used in cooperation with a touch sensor), or the like, and is configured to trigger operations such as power-on, power-off, pause, play, record, start pairing, and reset.

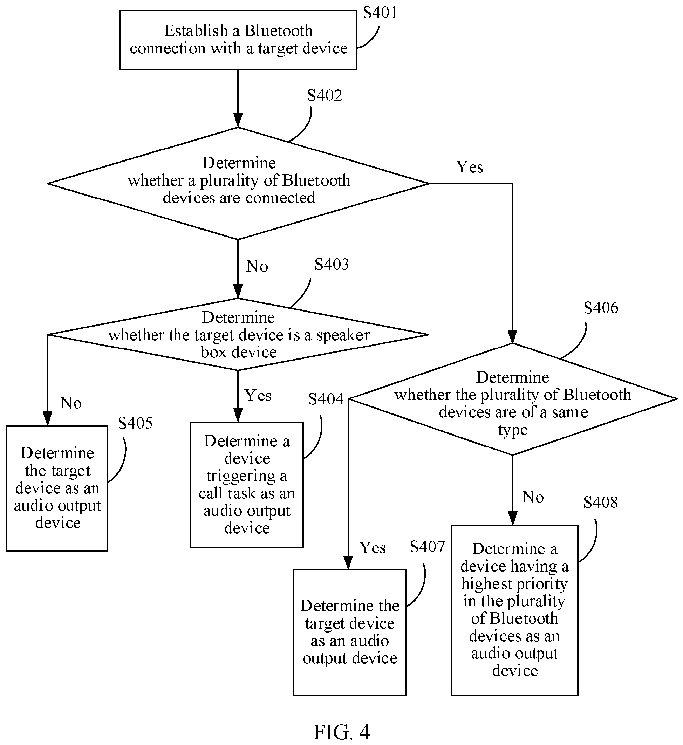

The following describes an audio output device confirmation method according to an embodiment of this application by using an example with reference to a flowchart. FIG. 4 is a schematic diagram of an audio output device confirmation method according to an embodiment of this application. The audio output device confirmation method is applied to a terminal device. According to different requirements, the sequence of the steps in the flowchart may be changed, and some steps may be omitted. As shown in FIG. 4, the method includes the following steps.

Step S401: Establish a Bluetooth connection with a target device.

The target device is a device to be connected to the terminal device through Bluetooth. In an embodiment of this application, the Bluetooth connection may be established with the target device in response to a Bluetooth connection instruction. The terminal device triggers the Bluetooth connection instruction of the target device in response to a click/tap of a user on a target device icon on a Bluetooth configuration interface of the terminal device. In an embodiment of this application, if Bluetooth of the terminal device is in an on state, the Bluetooth connection is established with the target device.

After the Bluetooth connection is established with the target device, step S402 is performed: Determine whether a plurality of Bluetooth devices are connected.

After the terminal device is connected to the target device, the terminal device determines a Bluetooth device with which the Bluetooth connection is currently established, and determines whether the plurality of Bluetooth devices are connected.

If the plurality of Bluetooth devices are not connected, it is determined that the terminal device is currently connected to the target device only, and step S403 is performed: Determine whether the target device is a speaker box device.

In an embodiment of this application, the terminal device may determine a device type of the target device based on device information received from the target device when the Bluetooth connection is established with the target device, and determine, based on the device type, whether the target device is the speaker box device. For example, the device information may include minor device class information and/or major device class information. A device type of the Bluetooth device may be determined based on the minor device class information and/or the major device class information. In an embodiment of this application, if the terminal device establishes a communication connection with a Bluetooth device and determines a device type of the Bluetooth device, a device type icon corresponding to the Bluetooth device may be displayed on the Bluetooth configuration interface. For example, as shown in FIG. 2, a device type icon of the earphone 1 and a device type icon of the vehicle-mounted device 1 may be displayed on the Bluetooth configuration interface. The device type icon of the Bluetooth device is displayed, so that a user can conveniently confirm the device type of the Bluetooth device.

If it is determined that the target device is the speaker box device, step S404 is performed: Determine a device triggering a call task as an audio output device.

In an embodiment of this application, the device triggering the call task may be the terminal device, or may be the target device, for example, the speaker box device. Specifically, when the terminal device receives an incoming call, an incoming call operation control corresponding to the incoming call is displayed on a display screen of the terminal device (and/or a display screen of the speaker box device), where the incoming call operation control includes an answering control. The call task is triggered in response to an operation of a user on the answering control on the display screen of the terminal device (or the display screen of the speaker box device). For example, when the user performs the operation on the answering control on the display screen of the terminal device, to trigger the call task, the terminal device determines that the terminal device is the audio output device and directly plays call audio data corresponding to the call task. For another example, when the user performs the operation on the answering control on the display screen of the speaker box device, to trigger the call task, the terminal device determines the speaker box device as the audio output device and sends the call audio data corresponding to the call task to the speaker box device, to cause the speaker box device to play the call audio data corresponding to the call task. The device triggering the call task is determined in the foregoing implementation, so that when the terminal device is connected to a speaker box and receives the incoming call, the device playing the call audio data of the call task is determined based on the device through which the user triggers the call task. This avoids a case in which after the terminal device is connected to the Bluetooth device (such as the speaker box device), the call audio data of the call task is directly played through the speaker box device, to ensure call privacy of the user.

If it is determined that the target device is not the speaker box device, step S405 is performed: Determine the target device as an audio output device.

If it is determined that the plurality of Bluetooth devices are connected, that is, it is determined that another Bluetooth device other than the target device is currently connected, step S406 is performed: Determine whether the plurality of Bluetooth devices are of a same type.

If the plurality of Bluetooth devices are of the same type, step S407 is performed: Determine the target device as an audio output device.

The target device is a last device that has established Bluetooth communication with the terminal device in the plurality of Bluetooth devices. An intention of the user is predicted based on behavior of the user, and the target device is determined as the audio output device, so that the determined audio output device better meets a user requirement. In an embodiment of this application, if the device types of the plurality of Bluetooth devices are all Bluetooth earphones and the plurality of devices do not include a hearing device, the target device is determined as the audio output device; if the device types of the plurality of Bluetooth devices are all Bluetooth earphones and the plurality of devices include one hearing device, the hearing device is determined as the audio output device; or if the device types of the plurality of Bluetooth devices are all Bluetooth earphones and the plurality of devices include a plurality of hearing devices, a last connected hearing device in the plurality of hearing devices may be determined as the audio output device.

If the plurality of Bluetooth devices are not of the same type, step S408 is performed: Determine a device having a highest priority in the plurality of Bluetooth devices as an audio output device.

In an embodiment of this application, priorities corresponding to different device types may be preset. For example, a priority corresponding to the Bluetooth device may be determined based on the device type of the Bluetooth device. The priorities corresponding to the different device types may be set according to user requirements. In an embodiment of this application, a Bluetooth earphone may be determined as a first priority, a vehicle-mounted device may be determined as a second priority, and a speaker box may be determined as a third priority. The first priority is higher than the second priority, and the second priority is higher than the third priority.

In an embodiment of this application, a corresponding priority of a Bluetooth device having a particular function in each device type may be set, and the corresponding priority may be different from a priority of another Bluetooth device of the same device type as the Bluetooth device. Among device types of the Bluetooth earphone, a hearing device is used to provide hearing support for a hearing arrested person, and has a particular function. For example, the hearing device may be determined as a first priority, a Bluetooth earphone other than the hearing device may be determined as a second priority, a vehicle-mounted device may be determined as a third priority, and a speaker box may be determined as a fourth priority. The first priority is higher than the second priority, the second priority is higher than the third priority, and the third priority is higher than the fourth priority. In this embodiment, assuming that the plurality of devices that have established the Bluetooth connections with the terminal device include four Bluetooth devices: a hearing device, another Bluetooth earphone other than the hearing device, a vehicle-mounted device, and a speaker box, the hearing device is determined as the audio output device.

In an embodiment of this application, if the plurality of Bluetooth devices include at least two devices of a same type, it may be determined that a priority of a device to which the terminal device is connected later is higher than a priority of a device to which the terminal device is connected earlier in the at least two devices of the same type. For example, the plurality of Bluetooth devices include three Bluetooth earphones, for example, a Bluetooth earphone 1, a Bluetooth earphone 2, and a Bluetooth earphone 3. The Bluetooth earphone 1 is the first to establish a connection with the terminal device in the three Bluetooth earphones, and the Bluetooth earphone 3 is the last to establish a connection with the terminal device in the three Bluetooth earphones. It is determined that a priority of the Bluetooth earphone 3 is higher than a priority of the Bluetooth earphone 2, and the priority of the Bluetooth earphone 2 is higher than a priority of the Bluetooth earphone 1. In another embodiment of this application, if the plurality of Bluetooth devices include at least two devices of a same type and the at least two devices of the same type include a hearing device, the hearing device may be determined as the audio output device; or if the plurality of Bluetooth devices include at least two devices of a same type and the at least two devices of the same type include a plurality of hearing devices, a last connected hearing device in the plurality of hearing devices may be determined as the audio output device.

In an embodiment of this application, after the terminal device determines the audio output device, the terminal device may immediately establish an SCO link with the determined audio output device. After a call task is triggered, call audio data corresponding to the call task may be sent to the determined audio output device based on the established SCO link, to cause the determined audio output device to play the call audio data corresponding to the call task. In an implementation of this application, after determining the audio output device, the terminal device may establish an SCO link with the determined audio output device in response to a triggered call task. The terminal device may send call audio data corresponding to the call task to the determined audio output device based on the established SCO link, to cause the determined audio output device to play the call audio data corresponding to the call task. The call task in the foregoing implementation may be triggered by a user on the terminal device, or may be triggered by the user on the Bluetooth device that has established Bluetooth communication with the terminal device, for example, triggered on the determined audio output device. This is not limited herein.

In an embodiment of this application, after determining the audio output device, the terminal device may further re-determine an audio output device based on an operation of the user on an audio output configuration option. For example, after steps S404, S405, S407, and S408 are performed, the audio output device may be reconfirmed based on the operation of the user on the audio output configuration option.

In the foregoing embodiment, after the terminal device establishes the Bluetooth connection with the target device, an appropriate audio output device may be automatically determined in the Bluetooth devices that have established the Bluetooth connections with the terminal device, to improve efficiency of determining the audio output device.

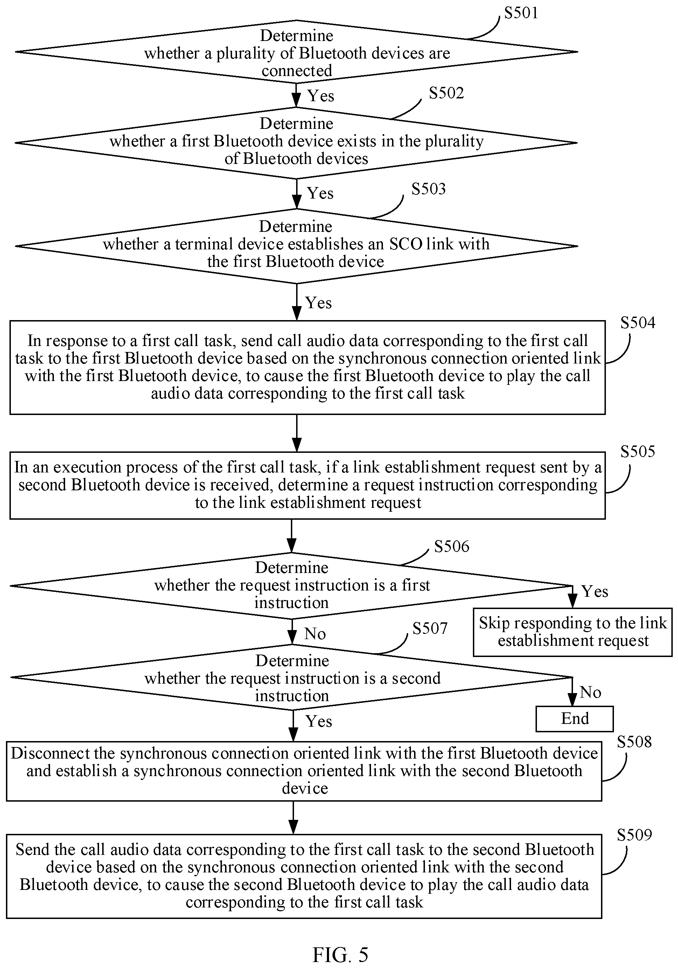

To avoid switching of a sound outlet channel against an intention of a user in a process in which the terminal device executes a call task, an embodiment of this application provides a sound outlet channel switching method. FIG. 5 is a diagram of a sound outlet channel switching method according to an embodiment of this application. The sound outlet channel switching method may be applied to a terminal device, or may be applied to a Bluetooth chip located on the terminal device. The Bluetooth chip is configured to provide a Bluetooth communication connection service for the terminal device. The Bluetooth chip stores computer instructions, and when the computer instructions are run on the Bluetooth chip, the Bluetooth chip is caused to perform the foregoing related method steps to implement the sound outlet channel switching method. FIG. 5 is described by using an example in which the sound outlet channel switching method is applied to the terminal device. A specific implementation in which the sound outlet channel switching method is applied to the Bluetooth chip located on the terminal device is the same as an implementation in which the sound outlet channel switching method is applied to the terminal device, and only an execution entity is different. For some specific implementations in which the sound outlet channel switching method is applied to the Bluetooth chip located on the terminal device, refer to related descriptions in FIG. 5. According to different requirements, the sequence of the steps in the flowchart may be changed, and some steps may be omitted. As shown in FIG. 5, the method includes the following steps.

Step S501: Determine whether a plurality of Bluetooth devices are connected.

In an embodiment of this application, after the terminal device establishes a Bluetooth connection to any Bluetooth device, that is, after the terminal device establishes a Bluetooth connection to a Bluetooth device with which a Bluetooth connection is not established, step S501 is performed. In another embodiment of this application, each time the terminal device receives an incoming call, the terminal device may perform a process shown in FIG. 5, and determine whether the plurality of Bluetooth devices are connected in step S501. In an implementation of this application, the terminal device may perform step S501 after or before performing any step shown in FIG. 4, for example, may perform step S501 after step S401 shown in FIG. 4, or may perform step S501 after step S408 shown in FIG. 4. In an embodiment of this application, time of performing step S501 is not limited.

In an embodiment of this application, if the plurality of Bluetooth devices are connected, the terminal device may determine an audio output device in the plurality of Bluetooth devices and establish an SCO link with the determined audio output device. For some specific implementations of determining the audio output device in the plurality of Bluetooth devices, refer to related descriptions in FIG. 4. In an implementation of this application, when the terminal device has already established an SCO link with a Bluetooth device and the terminal device is not in a call task, an audio output device may be re-determined in the plurality of Bluetooth devices.

In an embodiment of this application, when step S501 is performed after step S401 shown in FIG. 4, if it is determined that the plurality of Bluetooth devices are not connected, step S403 to step S405 shown in FIG. 4 may continue to be performed.

If the plurality of Bluetooth devices are connected, step S502 is performed: Determine whether a first Bluetooth device exists in the plurality of Bluetooth devices.

The first Bluetooth device is any Bluetooth earphone device whose device type is a Bluetooth earphone in the plurality of Bluetooth devices connected to the terminal device. In this embodiment, the Bluetooth device whose device type is the Bluetooth earphone may include one or more of a hearing device, a TWS earphone, an earbud earphone, an in-ear earphone, a headphone, an earmuff earphone, a neckband earphone, or an ear-hook earphone. In an embodiment of this application, a device type of each Bluetooth device may be determined based on device information sent by each Bluetooth device when Bluetooth connections are established with the plurality of Bluetooth devices.

If the first Bluetooth device exists in the plurality of Bluetooth devices, step S503 is performed: Determine whether the terminal device establishes an SCO link with the first Bluetooth device.

If the terminal device establishes the SCO link with the first Bluetooth device, it is determined that the first Bluetooth device is a current audio output device of the terminal device, and step S504 is performed: In response to a first call task, send call audio data corresponding to the first call task to the first Bluetooth device based on the synchronous connection oriented link with the first Bluetooth device, to cause the first Bluetooth device to play the call audio data corresponding to the first call task.

The first call task may be any call task triggered after the terminal device has established the SCO link with the first Bluetooth device.

Step S505: In an execution process of the first call task, if a link establishment request sent by a second Bluetooth device is received, determine a request instruction corresponding to the link establishment request.

The second Bluetooth device is a device that has established a Bluetooth connection with the terminal device before the terminal device performs the first call task, that is, may be any device other than the first Bluetooth device in the plurality of Bluetooth devices in step S501. The link establishment request is used to request to establish an SCO link with the terminal device. The second Bluetooth device may be a Bluetooth device capable of preempting a call audio channel, that is, a device capable of sending the link establishment request.

Step S506: Determine whether the request instruction is a first instruction.

The first instruction may be set according to a user requirement, or may be set as a request manner corresponding to a link establishment request that is frequently triggered automatically by the Bluetooth device. For example, the first instruction may be a connection request instruction. The connection request instruction is an instruction commonly used by a Bluetooth device in Bluetooth communication, and is used to request the terminal device to establish an SCO link.

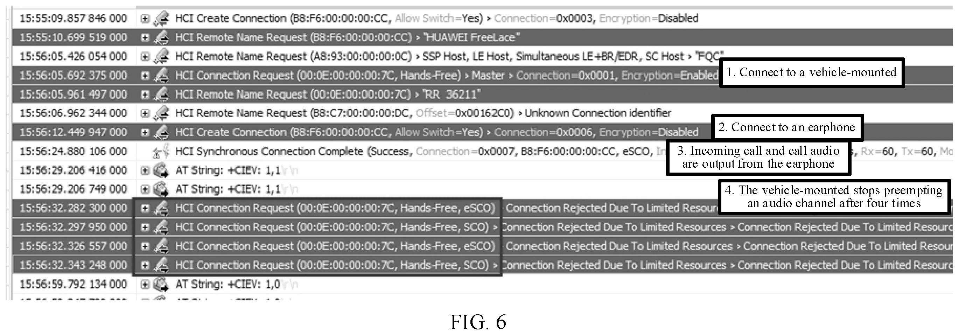

If the request instruction corresponding to the link establishment request is the first instruction, responding to the link establishment request is skipped. If the request instruction corresponding to the link establishment request is the first instruction, the synchronous connection oriented link with the first Bluetooth device is not disconnected and the synchronous connection oriented link with the first Bluetooth device is maintained. In an embodiment of this application, if the request instruction corresponding to the link establishment request is the first instruction, rejection information is sent to the second Bluetooth device. FIG. 6 is a schematic diagram of a second Bluetooth device sending a link establishment request according to an embodiment of this application. For example, it is assumed that the first Bluetooth device is an earphone, and the second Bluetooth device is a vehicle-mounted. As shown in FIG. 6, before the first call task, the terminal device establishes Bluetooth connections with the earphone and the vehicle-mounted. When executing the first call task, the terminal device uses the earphone as an audio output device, and establishes an SCO link with the earphone. The terminal device sends the call audio data corresponding to the first call task to the earphone based on the SCO link with the earphone, so that incoming call audio and call audio that correspond to the first call task are output from the earphone. In a process in which the terminal device executes the first call task, the vehicle-mounted sends a connection request instruction to the terminal device. After receiving the connection request instruction, the terminal device sends rejection information to the vehicle-mounted.

If the request manner corresponding to the link establishment request is not the first instruction, step S507 is performed: Determine whether the request manner is a second instruction.

If the request manner corresponding to the link establishment request is not the second instruction, the process ends. In an embodiment of this application, if the request manner corresponding to the link establishment request is not the second instruction, prompt information corresponding to the link establishment request may be displayed on the terminal device, where the prompt information includes a channel switching control. The channel switching control is configured to disconnect the synchronous connection oriented link with the first Bluetooth device and establish a synchronous connection oriented link with the second Bluetooth device. In response to an operation of a user on the channel switching control, the terminal device may disconnect the synchronous connection oriented link with the first Bluetooth device and establish the synchronous connection oriented link with the second Bluetooth device.

If the request instruction corresponding to the link establishment request is the second instruction, step S508 is performed: Disconnect the synchronous connection oriented link with the first Bluetooth device and establish the synchronous connection oriented link with the second Bluetooth device.

The second instruction may be set according to a user requirement, or may be set as a request manner corresponding to a link establishment request triggered by the user operating the terminal device. For example, the second instruction may be AT+BCC. AT+BCC is an instruction commonly used by a Bluetooth device in Bluetooth communication, and is used to request the terminal device to use the Bluetooth device as an audio output device, and request the terminal device to establish an SCO link with the Bluetooth device.

After disconnecting the synchronous connection oriented link with the first Bluetooth device, the terminal device stops sending the call audio data corresponding to the first call task to the first Bluetooth device, and the first Bluetooth device stops playing the call audio data corresponding to the first call task.

Step S509: Send the call audio data corresponding to the first call task to the second Bluetooth device based on the synchronous connection oriented link with the second Bluetooth device, to cause the second Bluetooth device to play the call audio data corresponding to the first call task.

According to the foregoing implementation method, after the second Bluetooth device sends the link establishment request whose request type is the first instruction, the first Bluetooth device may continue to be used as an audio output device, and a sound outlet channel is not switched. This avoids switching of the sound outlet channel caused by the second Bluetooth device actively triggering the link establishment request, and avoids switching of the sound outlet channel against an intention of a user in a process in which the device executes a call task. Alternatively, after the second Bluetooth device sends the link establishment request corresponding to the second instruction, the first Bluetooth device is stopped from being used as the audio output device, and the second Bluetooth device is used as the audio output device, so that the call audio data corresponding to the first call task is switched from being played by the first Bluetooth device to being played by the second Bluetooth device, to implement switching of the sound outlet channel.

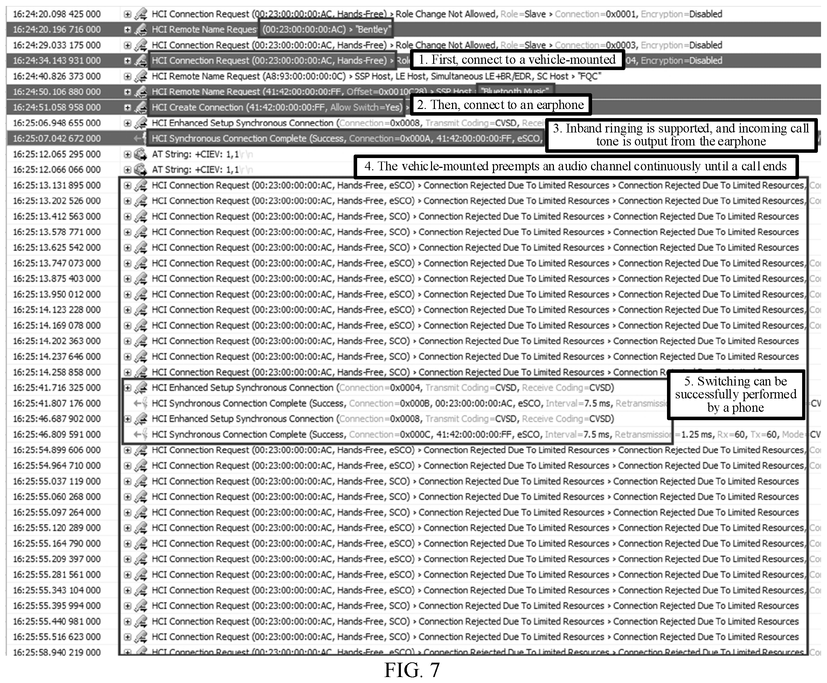

In an embodiment of this application, after step S504 in FIG. 5 is performed, in the execution process of the first call task, in response to an operation of the user on the terminal device, the terminal device re-determines an audio output device, disconnects the SCO link with the first Bluetooth device, and establishes an SCO link with the re-determined audio output device, so that the call audio data corresponding to the first call task is output from the re-determined audio output device. For example, it is assumed that the first Bluetooth device is an earphone, and the second Bluetooth device is a vehicle-mounted. As shown in FIG. 7, before the first call task, the terminal device establishes Bluetooth connections with the earphone and the vehicle-mounted. When executing the first call task, the terminal device uses the earphone as an audio output device, and establishes an SCO link with the earphone. The call audio data corresponding to the first call task is sent to the earphone based on the SCO link with the earphone, so that the call audio data corresponding to the first call task is output from the earphone. For example, as shown in FIG. 7, in response to a first operation of the user on the terminal device, the vehicle-mounted is determined as an audio output device, the SCO link with the earphone is disconnected, and an SCO link with the vehicle-mounted is established, so that call audio data corresponding to the first call task is output from the vehicle-mounted. For another example, as shown in FIG. 7, in response to a second operation of the user on the terminal device, the earphone is determined as the audio output device, an SCO link with the vehicle-mounted is disconnected, and the SCO link with the earphone is established, so that the call audio data corresponding to the first call task is output from the earphone. In the foregoing implementation, in the execution process of the first call task, an audio output device may be reconfirmed based on the operation of the user on the terminal device, to implement switching of the sound outlet channel. In an implementation of this application, in the execution process of the first call task, the terminal device rejects all connection request instructions sent by the vehicle-mounted. For example, as shown in FIG. 7, in response to the second operation of the user on the terminal device, after the terminal device establishes the SCO link with the earphone, in the execution process of the first call task, if the terminal device receives a connection request instruction sent by the vehicle-mounted again, the terminal device does not respond to the connection request instruction, does not disconnect the synchronous connection oriented link with the earphone, maintains the synchronous connection oriented link with the earphone, and sends rejection information to the vehicle-mounted.

In an embodiment of this application, after the execution of the first call task ends, if the link establishment request sent by the second Bluetooth device is received, the synchronous connection oriented link with the first Bluetooth device is disconnected, and the synchronous connection oriented link with the second Bluetooth device is established. A request manner corresponding to the link establishment request sent by the second Bluetooth device may include a connection request instruction and/or an AT+BCC instruction. According to the foregoing method, when the terminal device does not execute a call task, in response to a request of the Bluetooth device, an audio output device may be re-determined, and a new synchronous connection oriented link may be established.

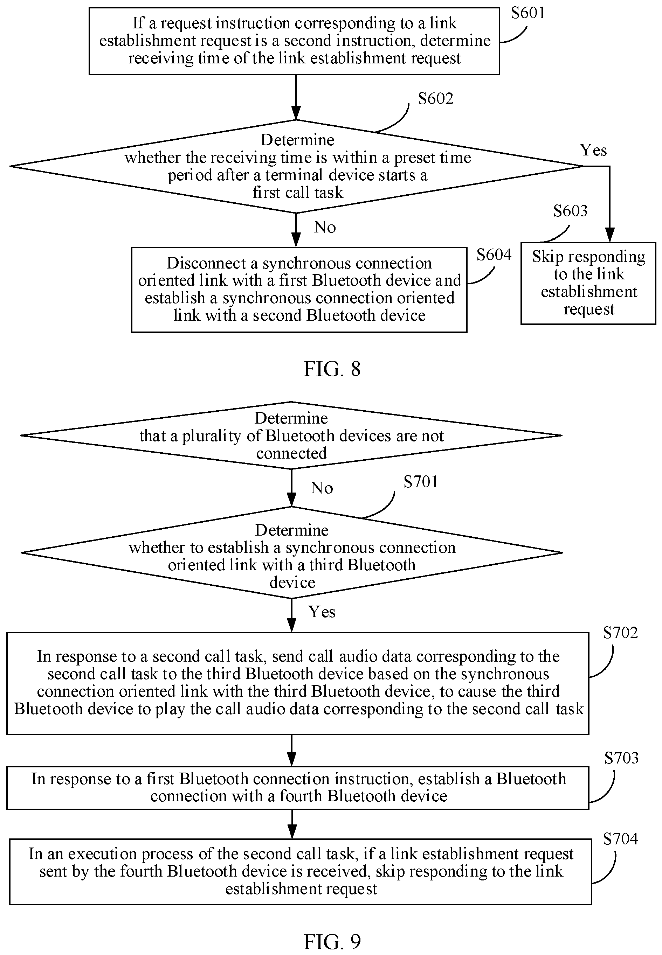

To avoid that the Bluetooth device automatically generates the link establishment request corresponding to the second instruction, an embodiment of this application provides a channel switching method based on the second instruction. FIG. 8 is a schematic diagram of a channel switching method based on a second instruction according to an embodiment of this application. The method shown in FIG. 8 may be a specific implementation of step S508 in FIG. 5. As shown in FIG. 8, the method includes the following steps.

Step S601: If the request instruction corresponding to the link establishment request is the second instruction, determine receiving time of the link establishment request.

Step S602: Determine whether the receiving time is within a preset time period after the terminal device starts the first call task.

The preset time period is a time period in which the user is less likely to switch the sound outlet channel. The preset time period may be set according to a user requirement. For example, the preset time period may be set based on reaction time of an operation of the user. For example, the preset time period may be set to 2S or 3.5S. In this embodiment, a link establishment request received within the preset time period after the terminal device starts the first call task is determined as a link establishment request automatically triggered by the Bluetooth device.

When the receiving time is within the preset time period after the terminal device starts the first call task, the link establishment request is determined as a link establishment request automatically triggered by the second Bluetooth device, and step S603 is performed: Skip responding to the link establishment request.

If the receiving time is within the preset time period after the terminal device starts the first call task, the link establishment request sent by the second Bluetooth device is not responded to, the synchronous connection oriented link with the first Bluetooth device is not disconnected, and the synchronous connection oriented link with the first Bluetooth device is maintained.

When the receiving time is after the preset time period after the terminal device starts the first call task, the link establishment request is determined as a link establishment request triggered by the user, and step S604 is performed: Disconnect the synchronous connection oriented link with the first Bluetooth device and establish the synchronous connection oriented link with the second Bluetooth device.

For some specific implementations of step S604, refer to the related descriptions above.

According to the foregoing implementation, the received link establishment request corresponding to the second instruction may be further determined based on the preset time period after the terminal device starts the first call task, to determine whether the link establishment request is the link establishment request actively triggered by the second Bluetooth device, and whether to disconnect the synchronous connection oriented link with the first Bluetooth device and re-establish the synchronous connection oriented link with the second Bluetooth device is determined based on a determining result. This avoids switching of a sound outlet channel against an intention of a user in a process in which the device executes a call task, and further improves accuracy of switching of the sound outlet channel.

FIG. 9 is a schematic diagram of a sound outlet channel switching method according to an embodiment of this application. The method shown in FIG. 9 is applied to a terminal device, and may be performed after step S402 in FIG. 4 or step S501 in FIG. 5. As shown in FIG. 9, the method includes the following steps.

If it is determined that a plurality of Bluetooth devices are not connected, step S701 is performed: Determine whether to establish a synchronous connection oriented link with a third Bluetooth device.

The third Bluetooth device is a Bluetooth device that has established a Bluetooth connection with the terminal device and whose device type is a Bluetooth earphone. If it is determined that the terminal device has established the synchronous connection oriented link with the third Bluetooth device, it is determined that the terminal device has currently established the Bluetooth connection with only the third Bluetooth device and does not establish Bluetooth communication with another device other than the third Bluetooth device. In an embodiment of this application, when S701 is performed after step S402 in FIG. 4, and when the device type of the target device in the method shown in FIG. 4 is a Bluetooth earphone, the third Bluetooth device may be the target device in the method shown in FIG. 4.

In an embodiment of this application, if it is determined that the synchronous connection oriented link has not been established with the third Bluetooth device, the synchronous connection oriented link may be established with the third Bluetooth device. In an implementation of this application, if it is determined that the synchronous connection oriented link has not been established with the third Bluetooth device and the terminal device establishes a Bluetooth connection with any Bluetooth device, the terminal device may determine an audio output device in the third Bluetooth device and the any Bluetooth device, and establish an SCO link with the determined audio output device. For example, when device types of the third Bluetooth device and the any Bluetooth device are different, the audio output device may be determined based on respective priorities of the third Bluetooth device and the any Bluetooth device. For another example, when the device types of the third Bluetooth device and the any Bluetooth device are the same, the any Bluetooth device may be determined as the audio output device, and an SCO link between the terminal device and the any Bluetooth device is established.

If the synchronous connection oriented link is established with the third Bluetooth device, it is determined that the third Bluetooth device is a current audio output device of the terminal device, and step S702 is performed: In response to a second call task, send call audio data corresponding to the second call task to the third Bluetooth device based on the synchronous connection oriented link with the third Bluetooth device, to cause the third Bluetooth device to play the call audio data corresponding to the second call task.

The second call task may be any call task triggered after the terminal device establishes with the third Bluetooth device.

Step S703: Receive a first Bluetooth connection instruction and establish a Bluetooth connection with a fourth Bluetooth device.

The first Bluetooth connection instruction indicates a user to establish the Bluetooth connection with the fourth Bluetooth device. The fourth Bluetooth device is a Bluetooth device to be connected to the terminal device. In an embodiment of this application, a device type of the fourth Bluetooth device is not limited. The fourth Bluetooth device may be any Bluetooth device of a Bluetooth earphone, a vehicle-mounted device, or a speaker box. In a process in which the terminal device executes the second call task, the first Bluetooth connection instruction may be triggered based on an operation performed by the user on a Bluetooth configuration interface. The terminal device establishes the Bluetooth connection with the fourth Bluetooth device after receiving the first Bluetooth connection instruction.

Step S704: In the execution process of the second call task, if a link establishment request sent by the fourth Bluetooth device is received, skip responding to the link establishment request.

If the link establishment request sent by the fourth Bluetooth device is received, the synchronous connection oriented link with the third Bluetooth audio output is not disconnected, and the synchronous connection oriented link with the third Bluetooth device is maintained.

In an embodiment of this application, a request manner corresponding to the link establishment request sent by the fourth Bluetooth device may include a connection request instruction and/or an AT+BCC instruction.

In an embodiment of this application, in the execution process of the second call task, the synchronous connection oriented link with the third Bluetooth device may be disconnected and a synchronous connection oriented link with the fourth Bluetooth device may be established based on an operation that the user determines the fourth Bluetooth device as an audio output device on the terminal device. The terminal device sends, based on the synchronous connection oriented link with the fourth Bluetooth device, the call audio data corresponding to the second call task to the fourth Bluetooth device based on the synchronous connection oriented link with the fourth Bluetooth device, to cause the fourth Bluetooth device to play the call audio data corresponding to the second call task. According to the foregoing method, the fourth Bluetooth device may be used as the audio output device based on an operation that the user reconfirms an audio output device on the terminal device, so that the call audio data corresponding to the second call task is switched from being played by the third Bluetooth device to being played by the fourth Bluetooth device, to improve user experience.

According to the foregoing implementation method, when the third Bluetooth device is used as the audio output device to output the call audio data, in a case that the fourth Bluetooth device sends the link establishment request, the third Bluetooth device may continue to be used as the audio output device, and a sound outlet channel is not switched. This avoids switching of the sound outlet channel caused by the link establishment request triggered when the fourth Bluetooth device is not the target Bluetooth device, improves stability of the third Bluetooth device used as the audio output device to output the call audio data, and ensures use experience of the user when using the third Bluetooth device for a call.

In an embodiment of this application, after the execution of the second call task ends, if the link establishment request sent by the fourth Bluetooth device is received, the synchronous connection oriented link with the third Bluetooth device is disconnected, and the synchronous connection oriented link with the fourth Bluetooth device is established. A request manner corresponding to the link establishment request sent by the fourth Bluetooth device may include a connection request instruction and/or an AT+BCC instruction. According to the foregoing method, when the terminal device does not execute a call task, in response to a request of the Bluetooth device, an audio output device may be re-determined, and a new synchronous connection oriented link may be established.

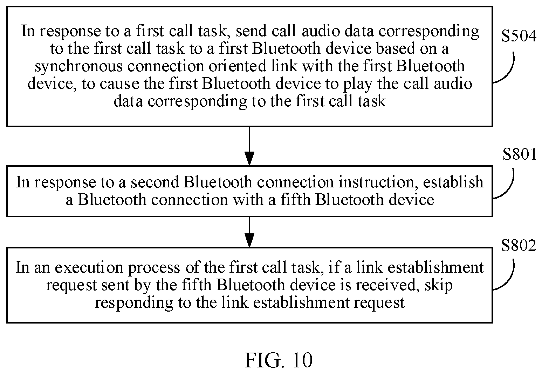

FIG. 10 is a schematic diagram of a sound outlet channel switching method according to an embodiment of this application. This application is described by using an example in which the method shown in FIG. 10 is performed after step S504 in FIG. 5. As shown in FIG. 10, the method includes the following steps.

In an execution process of a first call task, step S801 is performed: In response to a second Bluetooth connection instruction, establish a Bluetooth connection with a fifth Bluetooth device.

The second Bluetooth connection instruction indicates a user to establish the Bluetooth connection with the fifth Bluetooth device. The fifth Bluetooth device is a Bluetooth device to be connected to a terminal device, and may be a device with which the terminal device is to establish a Bluetooth connection in a process in which the terminal device performs the first call task. In an embodiment of this application, a device type of the fifth Bluetooth device is not limited. The fifth Bluetooth device may be any Bluetooth device of a Bluetooth earphone, a vehicle-mounted device, or a speaker box. In the process in which the terminal device executes the first call task, the second Bluetooth connection instruction may be triggered based on an operation performed by the user on a Bluetooth configuration interface. The terminal device establishes the Bluetooth connection with the fifth Bluetooth device after receiving the second Bluetooth connection instruction.

Step S801: In the execution process of the first call task, if a link establishment request sent by the fifth Bluetooth device is received, skip responding to the link establishment request.

If the link establishment request sent by the fifth Bluetooth device is received, a synchronous connection oriented link with a first Bluetooth audio output is not disconnected, and the synchronous connection oriented link with the first Bluetooth device is maintained.

In an embodiment of this application, a request manner corresponding to the link establishment request sent by the fifth Bluetooth device may include a connection request instruction and/or an AT+BCC instruction.

In an embodiment of this application, in the execution process of the first call task, the synchronous connection oriented link with the first Bluetooth device may be disconnected and a synchronous connection oriented link with the fifth Bluetooth device may be established based on an operation that the user determines the fifth Bluetooth device as an audio output device on the terminal device. The terminal device sends, based on the synchronous connection oriented link with the fifth Bluetooth device, call audio data corresponding to the first call task to the fifth Bluetooth device based on the synchronous connection oriented link with the fifth Bluetooth device, to cause the fifth Bluetooth device to play the call audio data corresponding to the first call task. According to the foregoing method, the fifth Bluetooth device may be used as the audio output device based on an operation that the user reconfirms an audio output device on the terminal device, so that the call audio data corresponding to the first call task is switched from being played by the first Bluetooth device to being played by the fifth Bluetooth device, to improve user experience.

According to the foregoing implementation method, when the first Bluetooth device is used as the audio output device to output the call audio data corresponding to the first call task, if the terminal device establishes the Bluetooth connection with the fifth Bluetooth device in the execution process of the first call task, in the execution process of the first call task, even if the fifth Bluetooth device sends the link establishment request, the terminal device may continue using the first Bluetooth device as the audio output device, and a sound outlet channel is not switched. This avoids switching of the sound outlet channel caused by the fifth Bluetooth device triggering the link establishment request, improves stability of the first Bluetooth device used as the audio output device to output the call audio data, and ensures use experience of the user when using the first Bluetooth device for a call.

In an embodiment of this application, after the execution of the first call task ends, if the link establishment request sent by the fifth Bluetooth device is received, the synchronous connection oriented link with the first Bluetooth device is disconnected, and the synchronous connection oriented link with the fifth Bluetooth device is established. A request manner corresponding to the link establishment request sent by the fifth Bluetooth device may include a connection request instruction and/or an AT+BCC instruction. According to the foregoing method, when the terminal device does not execute a call task, in response to a request of the Bluetooth device, an audio output device may be re-determined, and a new synchronous connection oriented link may be established.

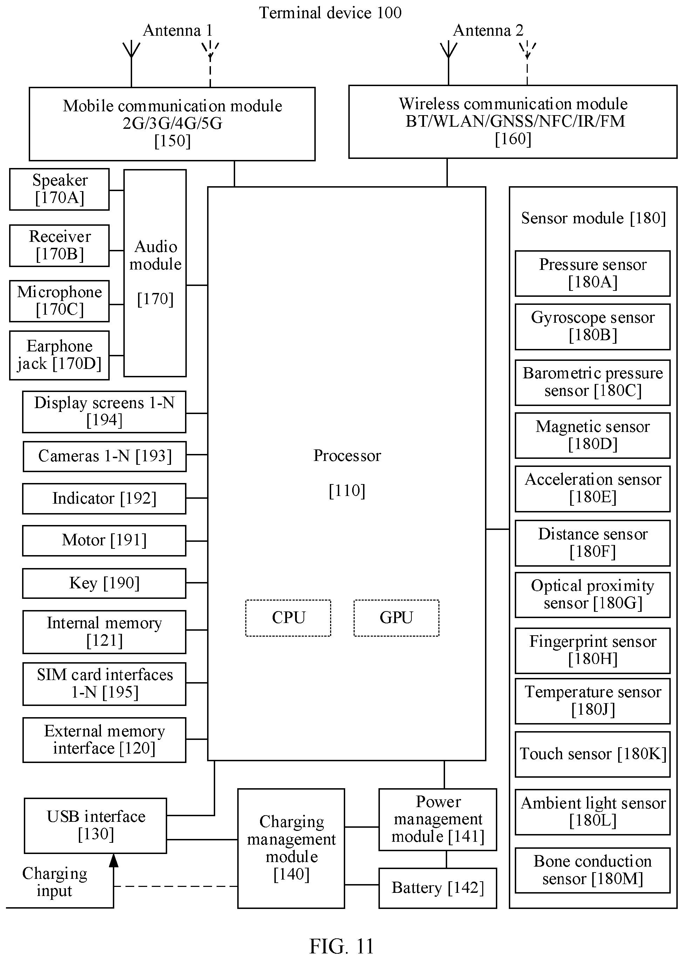

FIG. 11 is a schematic diagram of a structure of a terminal device according to an embodiment of this application. Refer to FIG. 11. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, an earphone jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, and a touch sensor 180K, an ambient light sensor 180L, a bone conduction sensor 180M, and the like.

It may be understood that the structure illustrated in this embodiment of the present invention does not constitute a specific limitation on the terminal device 100. In some other embodiments of this application, the terminal device 100 may include more or fewer components than those shown in the figure, some components may be combined, some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU).

A memory may be further disposed in the processor 110, to store instructions and data. In some embodiments, the memory in the processor 110 is a cache. The memory may store instructions or data that has been just used or is cyclically used by the processor 110. If the processor 110 needs to use the instructions or the data again, it may directly invoke the instructions or the data from the memory. This avoids repeated access and reduce waiting time of the processor 110, so that system efficiency is improved.

In some embodiments, the processor 110 may include one or more interfaces. The interface may include an inter-integrated circuit (inter-integrated circuit, I1C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I1C interface is a bidirectional synchronous serial bus, including a serial data line (serial data line, SDA) and a derail clock line (derail clock line, SCL). The I2S interface may be used for audio communication. The PCM interface may be further used for audio communication to sample, quantize, and encode an analog signal. In some embodiments, the audio module 170 may be coupled to the wireless communication module 160 through a PCM bus interface. The UART interface is a universal serial data bus used for asynchronous communication. The bus may be a bidirectional communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function.

The MIPI interface may be configured to connect the processor 110 to a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 through the CSI interface to implement a photographing function of the terminal device 100. The processor 110 communicates with the display screen 194 through the DSI interface to implement a display function of the terminal device 100.

The GPIO interface may be configured by software. The GPIO interface may be configured as a control signal or as a data signal. In some embodiments, the GPIO interface may be configured to connect the processor 110 to the camera 193, the display screen 194, the wireless communication module 160, the audio module 170, the sensor module 180, and the like. The GPIO interface may alternatively be configured as an I1C interface, an I2S interface, a UART interface, a MIPI interface, or the like.

The USB interface 130 is an interface that conforms to a USB standard specification, and may be specifically a Mini USB interface, a Micro USB interface, a USB Type C interface, or the like. The USB interface 130 may be configured to be connected to a charger to charge the terminal device 100, or may be configured to transmit data between the terminal device 100 and a peripheral device, or may be configured to connect to an earphone to play audio through the earphone. The interface may alternatively be configured to connect to another terminal device 100, such as an AR device.

It may be understood that an interface connection relationship between the modules illustrated in this embodiment of the present invention is merely an example for description, and does not constitute a limitation on the structure of the terminal device 100. In some other embodiments of this application, the terminal device 100 may alternatively use an interface connection manner different from that in the foregoing embodiments, or use a combination of a plurality of interface connection manners.

The charging management module 140 is configured to receive a charging input from a charger. The charger may be a wireless charger or a wired charger. The power management module 141 is configured to connect the battery 142, the charging management module 140, and the processor 110. The power management module 141 receives input from the battery 142 and/or the charging management module 140, and supplies power to the processor 110, the internal memory 121, the display screen 194, the camera 193, the wireless communication module 160, and the like. The power management module 141 may be further configured to monitor battery capacity, a quantity of battery cycles, a battery health state (electric leakage and impedance), and other parameters.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a wireless communication solution that is applied to the terminal device 100 and that includes 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1.

The wireless communication module 160 may provide a solution applied to the terminal device 100 for wireless communication such as a wireless local area network (wireless Local area network, WLAN), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

The terminal device 100 implements a display function by using the GPU, the display screen 194, the application processor, and the like. The GPU is a microprocessor for service abnormality prompt and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

In some embodiments, the terminal device 100 may include 1 or N display screens 194. N is a positive integer greater than 1. The terminal device 100 may implement a photographing function by using the ISP, the camera 193, the video codec, the GPU, the display screen 194, the application processor, and the like.

The camera 193 is configured to capture a static image or a video. An optical image of an object is generated through a lens and is projected to a photosensitive element.

The internal memory 121 may include one or more random access memories (random access memory, RAMs) and one or more non-volatile memories (non-volatile memory, NVMs).

The external memory interface 120 may be configured to be connected to an external non-volatile memory, to expand a storage capability of the terminal device 100. The external non-volatile memory communicates with the processor 110 through the external memory interface 120, to implement a data storage function. For example, a file such as music or video is stored in the external non-volatile memory.

The terminal device 100 may implement an audio function by using the audio module 170, the speaker 170A, the receiver 170B, the microphone 170C, the earphone jack 170D, the application processor, and the like, for example, implement a music playback function and a recording function.

The audio module 170 is configured to convert digital audio information into an analog audio signal for output, and is further configured to convert analog audio input into a digital audio signal. The audio module 170 may be further configured to encode and decode an audio signal.

The speaker 170A, also referred to as a "horn", is configured to convert an electrical audio signal into a sound signal. The terminal device 100 may be used to listen to music or answer a call in a hands-free mode by using the speaker 170A. The receiver 170B, also referred to as an "earphone", is configured to convert an electrical audio signal into a sound signal. When the terminal device 100 is used to answer a call or receive voice information, the receiver 170B may be put close to a human ear to answer a voice. The microphone 170C, also referred to as a "mic" or "mike", is configured to convert a sound signal into an electrical signal. When making a call or sending voice information, a user may make a sound approaching the microphone 170C through the mouth, to input a sound signal into the microphone 170C. At least one microphone 170C may be disposed in the terminal device 100. In some other embodiments, two microphones 170C may be disposed in the terminal device 100, to collect a sound signal and implement a noise reduction function. In some other embodiments, three, four, or more microphones 170C may be alternatively disposed in the terminal device 100, to collect a sound signal, implement noise reduction, recognize a sound source, implement a directional recording function, and the like.

The earphone jack 170D is configured to be connected to a wired earphone. The earphone jack 170D may be a USB interface 130, or may be a 3.5 mm open mobile terminal device 100 platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal to an electrical signal. The gyroscope sensor 180B may be configured to determine a motion posture of the terminal device 100. The barometric pressure sensor 180C is configured to measure barometric pressure. The magnetic sensor 180D includes a Hall sensor. The terminal device 100 may detect opening or closing of a flip leather case by using the magnetic sensor 180D. The acceleration sensor 180E may measure an acceleration value of the terminal device 100 in each direction (generally three axes). The distance sensor 180F is configured to measure a distance. The optical proximity sensor 180G may include, for example, a light-emitting diode (LED) and a light detector, for example, a photodiode. The ambient light sensor 180L is configured to perceive ambient light brightness. The fingerprint sensor 180H is configured to collect a fingerprint. The temperature sensor 180J is configured to detect temperature. The touch sensor 180K is also referred to as a "touch device". The touch sensor 180K may be disposed in the display screen 194. The touch sensor 180K and the display screen 194 form a touchscreen, also referred to as a "touch control screen". The bone conduction sensor 180M may obtain a vibration signal.

The key 190 includes a power key, a volume key, and the like. The key 190 may be a mechanical key, or a touch key. The motor 191 may generate a vibration prompt. The indicator 192 may be an indicator light, may be configured to indicate a charging state or a power change, and may be further configured to indicate a message, a missed incoming call, a notification, and the like.

The SIM card interface 195 is configured to connect to a SIM card. The SIM card may be inserted into the SIM card interface 195 or removed from the SIM card interface 195, to be in contact with and be separated from the terminal device 100. The terminal device 100 may support 1 or N SIM card interfaces. N is a positive integer greater than 1. The SIM card interface 195 may support a Nano SIM card, a Micro SIM card, a SIM card, and the like. A plurality of frame cards may be inserted into the same SIM card interface 195. Types of the plurality of frame cards may be the same or different. The SIM card interface 195 may be further compatible with different types of SIM cards. The SIM card interface 195 may be further compatible with an external storage card. The terminal device 100 interacts with a network by using the SIM card, to implement functions such as calling and data communication. In some embodiments, the terminal device 100 uses an eSIM, that is, an embedded SIM card. The eSIM card may be embedded in the terminal device 100, and cannot be separated from the terminal device 100.

An embodiment of this application further provides a computer storage medium. The computer storage medium stores computer instructions. When the computer instructions are run on a terminal device 100, the terminal device 100 is enabled to perform the foregoing related method steps, to implement the method provided in the foregoing embodiments, for example, the sound outlet channel switching method.

An embodiment of this application further provides a computer program product. When the computer program product is run on a computer, the computer is enabled to perform the foregoing related steps, to implement the method provided in the foregoing embodiments, for example, the sound outlet channel switching method.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the method provided in the foregoing method embodiments, for example, the sound outlet channel switching method.

The terminal device, the computer storage medium, the computer program product, or the chip provided in embodiments of this application may be configured to perform the corresponding method provided above. Therefore, for beneficial effects that can be achieved, refer to the beneficial effects of the corresponding method provided above. Details are not described herein again. The foregoing descriptions about implementations allow a person skilled in the art may clearly understand that, for the purpose of convenient and brief description, division of the foregoing functional modules is merely used as an example for illustration. During actual application, the foregoing functions may be allocated to different functional modules for implementation based on a requirement, to be specific, an inner structure of the apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely a logical function division and may be other division during actual implementations. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may be one or more physical units, to be specific, may be located in one place, or may be distributed in a plurality of different places. Some or all of the units may be selected based on actual needs to achieve the objectives of the solutions of embodiments.

In addition, function units in embodiments of this application may be integrated into one processing unit, or each unit may exist alone physically, or two or more units may be integrated into one unit. The integrated unit may be implemented in a form of hardware, or may be implemented in a form of a software functional unit. When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disk.

Finally, it should be noted that the foregoing embodiments are merely intended for describing the technical solutions of this application, but not for limiting this application. Although this application is described in detail with reference to preferred embodiments, persons of ordinary skill in the art should understand that modifications or equivalent replacements may be made to the technical solutions of this application without departing from the spirit and scope of the technical solutions of this application.

## Claims

1. A sound outlet channel switching method, applied to a terminal device, wherein the method comprises:
if the terminal device establishes Bluetooth connections with a plurality of Bluetooth devices and establishes a synchronous connection oriented link with a first Bluetooth device in the plurality of Bluetooth devices, in response to a first call task, sending call audio data corresponding to the first call task to the first Bluetooth device based on the synchronous connection oriented link with the first Bluetooth device, to cause the first Bluetooth device to play the call audio data corresponding to the first call task;
in an execution process of the first call task, if a link establishment request sent by a second Bluetooth device in the plurality of Bluetooth devices is received, determining a request instruction corresponding to the link establishment request; and
maintaining the synchronous connection oriented link with the first Bluetooth device if the request instruction is a first instruction; or
disconnecting the synchronous connection oriented link with the first Bluetooth device and establishing a synchronous connection oriented link with the second Bluetooth device if the request instruction is a second instruction; and sending the call audio data corresponding to the first call task to the second Bluetooth device based on the synchronous connection oriented link with the second Bluetooth device, to cause the second Bluetooth device to play the call audio data corresponding to the first call task.

2. The sound outlet channel switching method according to claim 1, wherein the disconnecting the synchronous connection oriented link with the first Bluetooth device and establishing the synchronous connection oriented link with the second Bluetooth device if the request instruction is the second instruction comprises:
if the request instruction is the second instruction and the link establishment request is a request received after a preset time period after the terminal device starts the first call task, disconnecting the synchronous connection oriented link with the first Bluetooth device and establishing the synchronous connection oriented link with the second Bluetooth device.

3. The sound outlet channel switching method according to claim 2, wherein the method further comprises:
if the request instruction is the second instruction and the link establishment request is a request received within the preset time period after the terminal device starts the first call task, maintaining the synchronous connection oriented link with the first Bluetooth device.

4. The sound outlet channel switching method according to claim 1, wherein after the terminal device establishes the Bluetooth connections with the plurality of Bluetooth devices, the method further comprises:
if a device type of the second Bluetooth device is different from a device type of the first Bluetooth device and a preset priority of the first Bluetooth device is higher than a preset priority of the second Bluetooth device, establishing the synchronous connection oriented link with the first Bluetooth device.

5. The sound outlet channel switching method according to claim 1, wherein after the terminal device establishes the Bluetooth connections with the plurality of Bluetooth devices, the method further comprises:
if a device type of the second Bluetooth device is the same as a device type of the first Bluetooth device, establishing the synchronous connection oriented link with the first Bluetooth device, wherein time at which the first Bluetooth device establishes a Bluetooth connection with the terminal device is later than time at which the second Bluetooth device establishes a Bluetooth connection with the terminal device.

6. The sound outlet channel switching method according to claim 1, wherein the method further comprises:
if the terminal device establishes a Bluetooth connection and a synchronous connection oriented link with a single third Bluetooth device, in response to a second call task, sending call audio data corresponding to the second call task to the third Bluetooth device based on the synchronous connection oriented link with the third Bluetooth device, to cause the third Bluetooth device to play the call audio data corresponding to the second call task;
receiving a first Bluetooth connection instruction and establishing a Bluetooth connection with a fourth Bluetooth device; and
in an execution process of the second call task, if a link establishment request sent by the fourth Bluetooth device is received, maintaining the synchronous connection oriented link with the third Bluetooth device.

7. The sound outlet channel switching method according to claim 1, wherein the method further comprises:
in the execution process of the first call task, in response to a second Bluetooth connection instruction, establishing a Bluetooth connection with a fifth Bluetooth device; and
in the execution process of the first call task, if a link establishment request sent by the fifth Bluetooth device is received, skipping responding to the link establishment request.

8. The sound outlet channel switching method according to any one of claims 1 to 7, wherein
the first instruction is connection request; and
the second instruction is AT+BCC.

9. A sound outlet channel switching method, applied to a Bluetooth chip, wherein the Bluetooth chip is mounted on a terminal device, and the method comprises:
if the terminal device establishes Bluetooth connections with a plurality of Bluetooth devices and establishes a synchronous connection oriented link with a first Bluetooth device in the plurality of Bluetooth devices, in response to a first call task, sending call audio data corresponding to the first call task to the first Bluetooth device based on the synchronous connection oriented link with the first Bluetooth device, to cause the first Bluetooth device to play the call audio data corresponding to the first call task;
in an execution process of the first call task, if a link establishment request sent by a second Bluetooth device in the plurality of Bluetooth devices is received, determining a request instruction corresponding to the link establishment request; and
maintaining the synchronous connection oriented link with the first Bluetooth device if the request instruction is a first instruction; or
disconnecting the synchronous connection oriented link with the first Bluetooth device and establishing a synchronous connection oriented link with the second Bluetooth device if the request instruction is a second instruction; and sending the call audio data corresponding to the first call task to the second Bluetooth device based on the synchronous connection oriented link with the second Bluetooth device, to cause the second Bluetooth device to play the call audio data corresponding to the first call task.

10. A computer-readable storage medium, comprising computer instructions, wherein when the computer instructions are run on a terminal device, the terminal device is caused to perform the sound outlet channel switching method according to any one of claims 1 to 8.

11. A terminal device, comprising a processor and a memory, wherein the memory is configured to store instructions, and the processor is configured to invoke the instructions in the memory, to cause the terminal device to perform the sound outlet channel switching method according to any one of claims 1 to 8.
